Europäisches Patentamt

European Patent Office

Office européen des brevets

(11) Numéro de publication: **0 524 590 A1**

## DEMANDE DE BREVET EUROPEEN

(21) Numéro de dépôt: **92112418.6**

(22) Date de dépôt: **21.07.92**

(51) Int. Cl.5: **H04L 27/14**

(30) Priorité: **22.07.91 FR 9109233**

(43) Date de publication de la demande:
**27.01.93 Bulletin 93/04**

(84) Etats contractants désignés:
**AT BE CH DE DK ES FR GB GR IT LI LU MC NL PT SE**

(71) Demandeur: **ALCATEL RADIOTELEPHONE**
**10, rue de la Baume**
**F-75008 Paris(FR)**

(72) Inventeur: **Castel, Dominique**
**9, rue Antonini**
**F-92110 Clichy(FR)**

(74) Mandataire: **Weinmiller, Jürgen et al**
**Lennéstrasse 9 Postfach 24**
**W-8133 Feldafing(DE)**

(54) **Dispositif de démodulation d'un signal numérique modulé par déplacement de fréquence à mise à jour à chaque demi-période du signal.**

(57) Le domaine de l'invention est celui de la démodulation de signaux numériques modulés par déplacement de fréquence (FSK). L'invention s'applique notamment à la radiotéléphonie.

L'invention concerne un dispositif de démodulation d'un signal numérique modulé par déplacement de fréquence, une fréquence de modulation distincte $(f_1, f_2)$ étant affectée à chaque valeur numérique que peut prendre ledit signal numérique, dispositif du type comprenant des moyens de conversion du signal modulé reçu en un signal logique (FSKR) pouvant prendre deux valeurs distinctes, comprenant des moyens de mesure des temps écoulés entre deux fronts montants successifs ($13_M$) et entre deux fronts descendants successifs ($13_D$) dudit signal logique (FSKR), coopérant avec des moyens (14) d'analyse desdits temps écoulés, délivrant une estimation de la valeur dudit signal numérique mise à jour à chaque détection d'un desdits fronts montants et descendants dudit signal logique (FSKR).

De cette façon toutes les transitions du signal reçu sont prises en compte. Le temps de décision de la valeur du signal numérique démodulé est donc plus rapide. Par ailleurs, la précision sur la valeur de ce signal démodulé est renforcée: celle-ci est mise à jour à chaque demi-période.

FIG.1

Le domaine de l'invention est celui de la transmission de signaux numériques. Plus précisément, l'invention concerne la démodulation de signaux modulés par déplacement de fréquence (en anglo-saxon : FSK (Frequency Shift Keying)).

L'invention s'applique à la réception de tous types de signaux numériques quels qu'ils soient. Un domaine d'application priviligiée de l'invention est la réception dans les mobiles, en particulier pour la radiotéléphonie.

La modulation par déplacement de fréquence consiste à associer à chaque valeur distincte à transmettre une fréquence particulière. Ainsi, dans le cas d'un signal binaire, une fréquence $f_1$ est attribuée à la valeur 1, et une fréquence $f_2$ à la valeur 0.

Ces fréquences sont émises alternativement pendant un certain nombre, le plus souvent non entier, de périodes, en fonction du signal numérique source. A la réception, il est nécessaire de reconnaître ces différentes fréquences.

On connaît déjà des méthodes permettant de démoduler de tels signaux. Il est notamment possible de calculer la période du signal reçu en l'échantillonnant à une fréquence élevée, et de comparer la valeur trouvée à un seuil. Cette technique présente deux inconvénients : elle impose d'attendre une période complète du signal reçu pour prendre une décision, et elle est sensible aux impulsions parasites. Ainsi, le brevet US 4 335 354 enseigne un démodulateur qui délivre une estimation de la fréquence du signal reçu mise à jour à chaque front de ce signal. Cependant, ce démodulateur procède par comparaison de la période du signal reçu avec un seuil. Il ne permet donc pas de détecter des périodes très longues ou des périodes très courtes provenant d'un parasite par exemple.

Il est également envisageable de réaliser cette démodulation en déterminant l'autocorrélation du signal reçu et d'une des fréquences de modulation, en faisant intervenir une ligne à retard dont le retard correspond à la période de cette fréquence. Les mêmes difficultés que précédemment sont rencontrées.

Plus précisément, un signal modulé par déplacement de fréquence pose classiquement deux problèmes liés à ses caractéristiques, lors de la démodulation:

- le temps de détection d'un changement de fréquence est élevé, du fait que le passage d'une fréquence à l'autre ne se fait pas forcément au moment d'un changement de période. Cela peut provoquer par exemple une impulsion très brève ;
- il est difficile de distinguer le bruit de transmission et les parasites du signal lui-même, en particulier dans le cas mentionné ci-dessus d'une impulsion brève.

Ces problèmes se posent de façon encore plus importante dans le cas de la réception dans les mobiles, les conditions de réception variant en permanence.

L'invention a notamment pour objectif de pallier ces différents inconvénients de l'état de la technique.

Plus précisément, un objectif de l'invention est de fournir un dispositif de démodulation d'un signal numérique modulé par déplacement de fréquence à temps de décision réduit par rapport aux dispositifs connus. En d'autres termes, l'invention vise à fournir un dispositif de démodulation détectant très rapidement les changements du signal numérique source, sans attendre qu'une période complète du signal modulé soit écoulée.

Un autre objectif de l'invention est de fournir un tel dispositif, qui soit peu sensible aux bruits de transmission et aux différentes impulsions parasites pouvant perturber la démodulation.

L'invention a également pour objectif de fournir un tel dispositif, dont la sensibilité aux évanouissements sélectifs (fading) est réduite.

Un autre objectif de l'invention est encore de fournir un tel dispositif utilisable pour la réception dans les mobiles, notamment pour la radiotéléphonie.

L'invention a également pour objectif de fournir un tel dispositif dont le fonctionnement soit entièrement numérique, et qui puisse être réalisé en circuit intégré à un coût de revient acceptable.

Ces objectifs, ainsi que d'autres qui apparaîtront par la suite, sont atteints selon l'invention à l'aide d'un dispositif de démodulation d'un signal numérique modulé par déplacement de fréquence, une fréquence de modulation distincte étant affectée à chaque valeur numérique que peut prendre ledit signal numérique, dispositif du type comprenant des moyens de conversion du signal modulé reçu en un signal logique pouvant prendre deux valeurs distinctes, comprenant des moyens de mesure des temps écoulés entre deux fronts montants successifs et entre deux fronts descendants successifs dudit signal logique, coopérant avec des moyens d'analyse desdits temps écoulés, délivrant une estimation de la valeur dudit signal numérique mise à jour à chaque détection d'un desdits fronts montants et descendants dudit signal logique.

De cette façon toutes les transitions du signal reçu sont prises en compte. Le temps de décision de la valeur du signal numérique démodulé est donc plus rapide : il n'est pas nécessaire d'attendre une période complète avant de prendre une décision.

Par ailleurs, la précision sur la valeur de ce signal démodulé est renforcée, par rapport aux dispositifs connus. En effet, celle-ci est mise à jour à chaque demi-période.

Avantageusement, lesdits moyens de mesure des temps écoulés comprennent deux compteurs, initialisés à chaque détection d'un front montant ou descendant respectivement, et activés à une fréquence de comptage très supérieure auxdites fréquences de modulation.

Cela permet notamment de réaliser la démodulation de façon entièrement numérique.

Dans ce cas, de façon à obtenir une bonne précision, on choisit préférentiellement une fréquence de comptage au moins mille fois supérieure à la plus élevée desdites fréquences de modulation.

Dans le cas particulier de la démodulation d'un signal binaire modulé pouvant prendre deux fréquences distinctes $f_1$ et $f_2$, auxquelles correspondent deux périodes $T_1$ et $T_2$, $T_1$ étant supérieure à $T_2$, il est avantageux que lesdits moyens d'analyse des temps écoulés positionnent à la valeur binaire correspondant à ladite fréquence $f_2$ ladite estimation de la valeur dudit signal binaire lorsque le dernier temps écoulé mesuré entre deux fronts montants ou deux fronts descendants successifs est inférieur à la durée $(T_1 + T_2)/2$ et à la valeur binaire correspondant à ladite fréquence $f_1$ dans le cas contraire.

Le décodage s'avère ainsi particulièrement simple, puisqu'il consiste en une simple comparaison.

De façon à affiner le décodage, il est possible de distinguer également les cas particuliers des temps écoulés très courts ou très longs.

Ainsi, dans un mode de réalisation avantageux de l'invention, lesdits moyens d'analyse des temps écoulés conservent inchangée ladite estimation de la valeur dudit signal binaire lorsque le temps écoulé mesuré entre deux fronts montants ou deux fronts descendants successifs est inférieur à la durée $2T_2-T_1$.

De cette façon, les impulsions brèves, correspondant notamment à des signaux parasites, ne sont pas prises en compte, et ne perturbent pas le signal numérique démodulé.

De même, préférentiellement, lesdits moyens d'analyse des temps écoulés positionnent à sa valeur de repos ladite estimation de la valeur dudit signal binaire, lorsque le dernier temps écoulé entre deux fronts montants ou deux fronts descendants successifs est supérieur à la durée $2T_1-T_2$.

En effet, lorsque le signal passe à l'état de repos, il n'y a plus de transitions pouvant provoquer l'arrêt des compteurs.

De façon préférentielle, ladite période $T_1$ est inférieure ou égale à $1,9.T_2$.

Dans un mode de réalisation avantageux de l'invention, ledit dispositif comprend des moyens de filtrage préalable dudit signal logique, éliminant les impulsions d'une durée inférieure à un seuil prédéterminé.

Ainsi, les brèves perturbations sont éliminées sans que les moyens de mesure des temps écoulés les prennent en compte. Les mesures en cours continuent, comme s'il n'y avait pas de perturbations.

L'immunité au bruit de transmission du dispositif est alors très bonne.

Avantageusement, lesdits moyens de filtrage comprennent un compteur, activé à une fréquence de comptage très supérieure auxdites fréquences de modulation, mesurant le temps écoulé entre deux fronts successifs dudit signal logique, et des moyens d'élimination des fronts correspondant à une impulsion d'une durée inférieure audit seuil prédéterminé.

Dans un mode de réalisation préférentiel, ledit seuil prédéterminé est sensiblement égal au douzième de la période correspondant à la fréquence de modulation la plus élevée.

Dans un mode de réalisation avantageux, le dispositif de l'invention est réalisé de façon entièrement numérique, sur un circuit intégré CMOS.

D'autres caractéristiques et avantages de l'invention apparaîtront à la lecture de la description suivante d'un mode de réalisation préférentiel de l'invention, donné à titre illustratif et non limitatif, et des dessins annexés, dans lesquels :

- la figure 1 est un schéma synoptique illustrant le principe général du dispositif de l'invention ;
- la figure 2 présente le principe du décodage des durées mesurées par le dispositif de la figure 1, par comparaison à plusieurs seuils ;
- la figure 3 est un exemple de démodulation selon l'invention, associant à un signal reçu le signal démodulé correspondant ;
- la figure 4 est le schéma électrique détaillé d'un mode de réalisation du dispositif de la figure 1.

L'invention concerne donc la démodulation d'un signal numérique modulé par déplacement de fréquence (FSK). Dans le mode de réalisation décrit ci-dessous en détail, le dispositif de l'invention est appliqué à la démodulation d'un signal binaire. Il est clair toutefois que l'invention peut être généralisée à tout type de signal numérique pouvant prendre plus de deux valeurs distinctes (il est alors nécessaire de distinguer autant de fréquences de modulation).

Dans l'exemple décrit, l'invention a donc pour objectif de distinguer deux fréquences $f_1$ et $f_2$ en réception, et de leur attribuer une valeur binaire 1 ou 0. On considère dans la suite que $f_2$ est supérieure à $f_1$. Préférentiellement, $f_2$ est choisie inférieure ou égale à $1,9 \times f_1$. On désigne par $T_1 = 1/f_1$ et $T_2 = 1/f_2$ les périodes théoriques des signaux parfaits.

Ces fréquences sont émises pendant un certain nombre non entier de périodes, et sont en général bruitées, soumises à des évanouissements sélectifs ou interrompues par des parasites. Le dispositif de l'invention doit donc prendre en compte ces différentes perturbations.

Le signal modulé reçu est tout d'abord converti en un signal logique FSKR, par exemple par passage dans un comparateur à seuil.

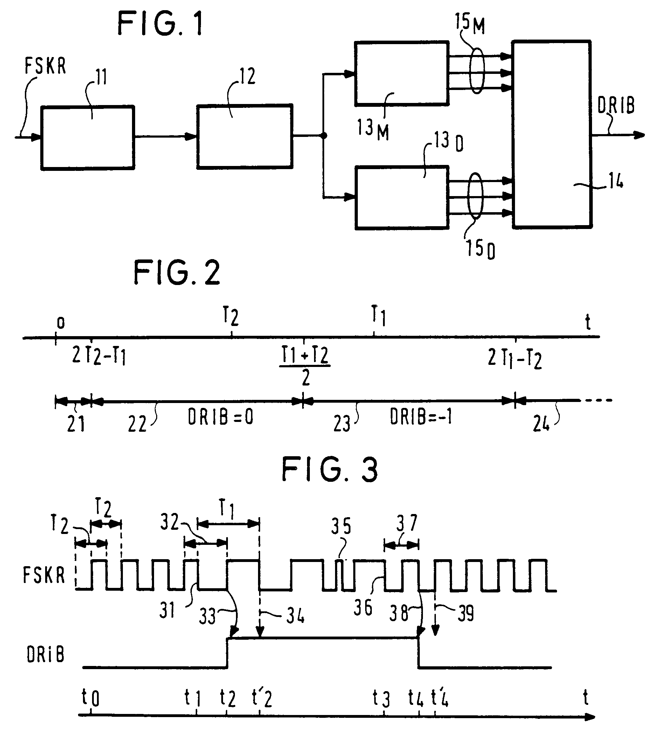

Le démodulateur selon l'invention, tel que représenté en figure 1, prend donc en compte ce signal logique FSKR, et délivre un signal DRIB de décision 0 ou 1.

Le signal logique est ensuite transmis à un module 11 de détection des transitions du signal FSKR, c'est-à-dire de détection des fronts montants et descendants, puis à un module 12 de filtrage, destiné à supprimer les impulsions parasites brèves, qui peut perturber intempestivement la démodulation par une remise à zéro non voulue. Ce module 12 de filtrage élimine par exemple toutes les impulsions d'une durée inférieure à $T_2/12$. Il peut notamment fonctionner par comptage, ainsi qu'on le verra par la suite.

Chaque front montant non supprimé par le filtrage 12 est ensuite transmis à un module $13_M$ de comptage. Les fronts descendants sont pris en compte dans un module $13_D$ de comptage identique.

Ces modules $13_M$ et $13_D$ de comptage mesurent le temps écoulé $T_M$ entre deux fronts montants successifs (respectivement $T_D$ entre deux fronts descendants). Ils sont activés à une fréquence d'échantillonnage $f_{éch}$ très supérieure aux fréquences de modulation $f_1$ et $f_2$ de façon à déterminer de façon précise ces périodes $T_d$ et $T_m$, en nombre de périodes d'échantillonnage $T_{éch}$. On choisit par exemple : $f_{éch} \geq 1000xf_2$.

Les modules $13_M$ et $13_D$ de comptage transmettent les informations de durée $T_M$ ou $T_D$ entre deux fronts à un module 14 de décodage, qui met à jour en conséquence le signal démodulé DRIB. Avantageusement, chaque module de comptage délivre trois informations $15_M$, $15_D$, indiquant si la période $T_M$ ou $T_D$ est supérieure aux trois seuils $2T_2-T_1$, $(T_1+T_2)/2$ et $2T_1-T_2$. Le principe du décodage est précisé plus loin, en relation avec la figure 2.

En utilisant deux compteurs $13_M$ et $13_D$, on diminue sensiblement les effets du bruit pur, qui est alors réparti sur toute une période. Par ailleurs, ce dispositif est ainsi insensible au rapport cyclique.

De plus, le signal démodulé DRIB est remis à jour à chaque transition du signal FSKR, et donc à chaque demi-période. La démodulation est donc beaucoup plus précise, et les décisions sont prises plus rapidement que dans les dispositifs connus, nécessitant l'observation d'une période complète.

La figure 2 illustre le fonctionnement du module 14 de décodage. Le signal émis peut prendre deux périodes $T_1$ et $T_2$, $T_1$ étant égale à $1,9xT_2$. D'autres valeurs de $T_1$ par rapport à $T_2$ peuvent bien sûr être choisies, de préférence inférieures. On décrit ci-dessous le décodage de la période $T_M$ entre deux fronts montants. Le décodage de la période $T_D$ entre deux fronts descendants est totalement identique.

Si $T_M$ est inférieure à la durée $2T_2-T_1$ (21), aucune décision n'est prise. La valeur de DRIB reste inchangée, et le compteur $13_M$ est réinitialisé. On considère donc qu'il s'agit d'une impulsion parasite. On réalise ainsi un second filtrage, complémentaire de celui réalisé par le module 12.

Si $T_M$ est comprise entre $2T_2-T_1$ et $(T_1+T_2)/2$ (22), on considère que la période réelle est $T_2$. Le signal DRIB prend alors la valeur 0.

Si $T_M$ est comprise entre $(T_1+T_2)/2$ et $2T_1-T_2$ - (23), on estime que la période réelle est $T_1$, et DRIB prend la valeur 1.

Dans le cas où $T_M$ dépasse $2T_1-T_2$ (24), le signal FSKR est considéré au repos, et le signal de sortie est positionné à l'état 1, sans attendre de variation (permettant d'interrompre le comptage) sur FSKR.

L'efficacité du dispositif de l'invention sera mieux comprise en observant l'exemple de fonctionnement de la figure 3, qui présente un signal logique FSKR à démoduler, et le signal démodulé DRIB correspondant.

A l'instant $t_0$, le signal FSKR a une période $T_2$. Le signal DRIB est donc positionné à la valeur 0. A l'instant $t_1$, il s'est produit un changement de fréquence, ce qui se traduit par une transition 31 ne correspondant pas un nombre entier de périodes.

Selon l'invention, le module $13_M$ de comptage de la période $T_M$ entre deux fronts montants mesure la durée 32. Le module 14 de décodage constate que cette durée 32 est supérieure à $(T_1+T_2)/2$. Le signal DRIB passe alors (33) à l'état 1, dès l'instant $t_2$.

Dans la réalité, la mise à jour de DRIB est retardée d'environ $T_2/12$, du fait du retard introduit par le module 12 de filtrage. En effet, ce module élimine les brèves impulsions. Il ne transmet donc les fronts aux modules de comptage qu'après avoir attendu pendant la durée $T_2/12$ la fin éventuelle de l'impulsion.

Dans un démodulateur de type connu, il eût fallu attendre une période complète pour prendre une décision 34. Le signal DRIB n'aurait alors été mis à jour qu'à l'instant $t'_2$, soit avec un retard égal à $T_1/2$.

Lorsque le signal FSKR, présente une impulsion parasite 35, d'origine quelconque, la perturbation n'affecte pas le signal démodulé DRIB. Elle est en effet éliminée soit avant comptage, par le filtrage 12, si sa durée est inférieure à $T_2/12$, soit après comptage, si la période mesurée est inférieure à $2T_2-T_1$.

Cette double élimination des perturbations permet d'obtenir une très bonne immunité au bruit du signal démodulé.

A l'instant $t_3$, le signal FSKR change à nouveau de fréquence (36). Le compteur $13_D$ mesure la durée 37 entre les deux premiers fronts descendants. Le module 14 de décodage provoque à l'instant $t_4$ le passage 38 du signal DRIB à l'état 0, la durée 37 étant inférieure à $(T_1 + T_2)/2$. Selon le principe des démodulateurs connus, cette transition ne serait apparue qu'à l'instant $t'_4$.

Il apparaît donc clairement que le dispositif de l'invention présente l'avantage d'un temps de réaction plus court aux variations de fréquence du signal reçu, du fait qu'il tient compte des temps écoulés entre deux fronts montants successifs 32 et entre deux fronts descendants successifs 37 pour prendre des décisions 33, 38. Cette caractéristique permet par ailleurs d'assurer une meilleure fiabilité du signal démodulé DRIB, celui-ci étant remis à jour à chaque transition utile (les impulsions parasites étant éliminées) du signal logique FSKR.

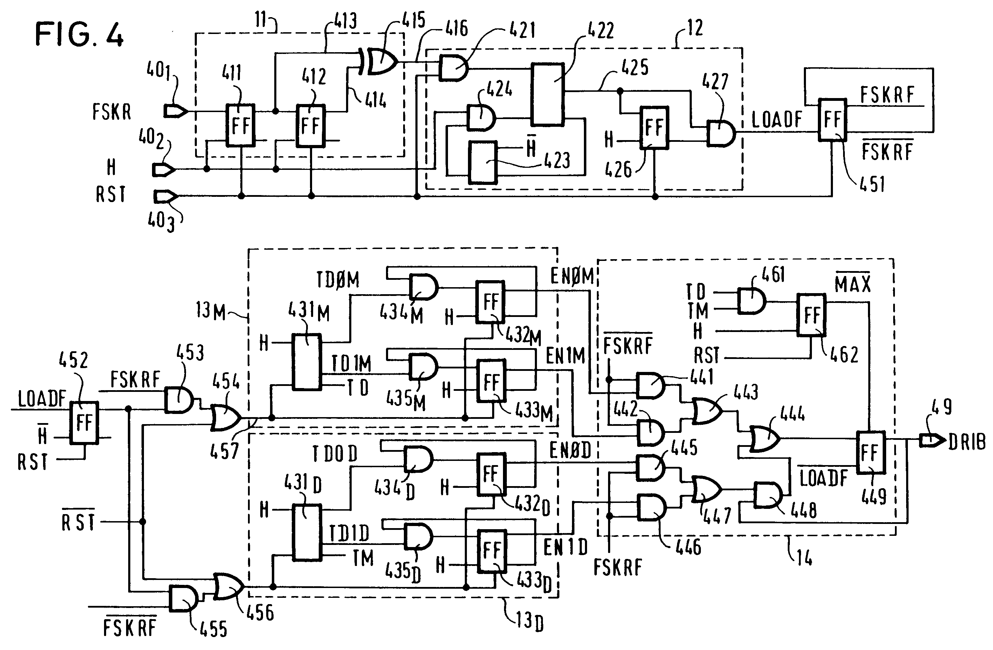

La figure 4 est le schéma électrique d'un mode de réalisation du dispositif de la figure 1, pouvant aisément être réalisé en circuit intégré, par exemple selon la technologie CMOS.

Ce circuit comprend trois entrées $41_1$, $41_2$ et $41_3$, correspondant aux signaux:

- $40_1$ : FSKR : signal modulé reçu, préalablement transformé en un signal logique, par exemple par un comparateur à seuil;
- $40_2$ : H : signal d'horloge, correspondant à la fréquence $f_{éch}$ de comptage des compteurs ;
- $40_3$ : RST : signal de réinitialisation complète du circuit.

Il délivre en sortie le signal 49 DRIB.

Le signal FSKR est donc transmis tout d'abord au module 11 de détection des fronts, qui comprend deux bascules bistables 411 et 412 (ou bascules "flip-flop" (FF)) en cascade, activées à la fréquence $f_{éch}$ par le signal H.

Ces deux bascules mémorisent donc l'état du signal FSKR aux deux derniers instants d'échantillonnage. Les sorties Q 413 et 414 de ces bascules sont ensuite comparées, à l'aide d'un OU exclusif 415, qui produit un signal 416 actif lorsque les sorties 413 et 414 sont différentes, ce qui correspond à l'apparition d'un front montant ou descendant.

Les bascules 411 et 412 peuvent être réinitialisées par le signal RST.

Le signal 416 est transmis au module de filtrage 12, par l'intermédiaire d'une porte ET 421, réalisant un ET logique entre le signal 416 et le signal RST. La sortie de la porte ET 421 pilote le déclenchemet d'un compteur 422, jouant le rôle de filtrage des impulsions parasites.

Le compteur 422 est activé par la sortie d'une porte ET 424, effectuant un ET logique entre le signal d'horloge H et la sortie d'une bascule "latch" 423 dont l'entrée est alimentée par le compteur 422, et activée par le signal $\overline{H}$, opposé du signal H. Il délivre en sortie 425 un signal identique au signal reçu en entrée, avec un retard de $T_2/12$, si aucun front n'a été détecté pendant cet intervalle de temps. Dans le cas contraire, la sortie 425 reste inchangée, et donc non perturbée par les impulsions parasites.

Cette sortie est mémorisée dans une bascule bistable, activée par le signal H, et réinitialisable par le signal RST. Une porte 427 réalise un ET logique entre la sortie 425 et la sortie inversée $\overline{Q}$ de la bascule 426, et délivre un signal LOADF d'autorisation de départ des compteurs sur front montant ou descendant, mémorisé dans une bascule bistable 451, fournissant le signal FSKRF et son opposé $\overline{FSKRF}$. Cette bascule peut-être réinitialisée par le signal RST.

Le signal LOADF alimente également une seconde bascule 452, activée par le signal d'horloge H et réinitialisable par RST.

Une porte ET 453 réalise un ET logique entre la sortie de la bascule 452 et le signal FSKR issu de la bascule 451. La sortie de ce ET 453 est transmise à une porte NON OU 454, délivrant au module $13_M$ de comptage la valeur opposée au OU logique entre la sortie de la porte ET 453 et l'opposée $\overline{RST}$ du signal de réinitialisation.

La même combinaison est réalisée pour le pilotage du module $13_D$ de comptage entre deux fronts descendants, à l'aide des portes ET455 et NON OU 456, en tenant compte de la sortie inversée $\overline{FSKRF}$ de la bascule 451.

Le signal 457 issu de la porte 454 commande le déclenchement du compteur $431_M$, qui est activé par le signal d'horloge M. Le compteur $431_M$ délivre trois signaux TD0M, TD1M et TD, correspondant à :

- TD0M : durée entre deux impulsions inférieure à $(T_1 + T_2)/2$, mais supérieure à $2T_2-T_1$ ;
- TD1M : durée entre deux impulsions comprise entre $(T_1 + T_2)/2$ et $2T_1-T_2$ - (sortie inversée) ;
- TD : durée entre deux impulsions supérieure à $2T_1-T_2$ (sortie inversée).

Les sorties TD0M et TD1M alimentent respectivement deux bascules bistables $432_M$ et $433_M$, par l'intermédiaire d'une porte NON ET $434_M$ -

(respectivement $435_M$), réalisant un NON ET logique entre le signal TD0M (respectivement TD1M) et la sortie inversée de la bascule $432_M$ - (respectivement $433_M$).

Ces bascules $432_M$ et $433_M$ sont activées par le signal d'horloge H, et réinitialisées à chaque réception d'un nouveau front montant, par le signal 457. Elles délivrent en sortie les signaux EN0M et EN1M, correspondant à la validation et la mémorisation des signaux TD0M et TD1M respectivement, qui sont dirigés vers le module 14 de décodage.

Le module $13_D$ de comptage entre deux fronts descendants fonctionne de façon totalement identique, à l'aide du compteur $431_D$, qui délivre les signaux TD0D, TD1D et TM, des portes NON ET $434_D$ et $435_D$ et des bascules $432_D$ et $433_D$. Il délivre, symétriquement, les sorties EN0D et EN1D, qui alimentent le module 14 de décodage.

Ce module de décodage comprend un jeu de portes logiques, pilotant une bascule bistable 449, qui délivre en sortie le signal démodulé DRIB.

Deux portes ET 441, 442 réalisent respectivement un ET logique entre le signal $\overline{FSKRF}$ issu de la bascule 451 avec les sorties EN0M et EN1M respectivement. Les sorties de ces deux portes ET 441 et 442 alimentent une porte OU 443, dont la sortie est elle-même reliée à une seconde porte OU 444.

De façon symétrique, deux portes ET 445 et 446 effectuent un ET logique entre les sorties respectives EN0D et EN1D du module $13_D$ de comptage avec le signal FSKRF. Les sorties des portes ET 445 et 446 sont transmises à une porte NON OU 447, dont la sortie est dirigée vers une ET 448, dont l'autre entrée est le signal DRIB issu de la bascule 449. La sortie de cette porte ET 448 est la seconde entrée de la porte OU 444.

La sortie de la porte OU 444 alimente la bascule bistable 449, qui est activée par le signal LOADF.

Cette bascule 449 peut être réinitialisée par le signal $\overline{MAX}$, lorqu'aucune transition n'a été détectée depuis un certain laps de temps. Ce signal $\overline{MAX}$ est mémorisé dans une bascule 462, activée par le signal d'horloge H et réinitialisable par le signal RST. La bascule 462 est alimentée par une porte ET 461, réalisant un ET logique entre les signaux TD et TM émis respectivement par les compteurs $431_M$ et $431_D$. En d'autres termes, la porte ET 461 provoque la mise à l'état de repos du signal DRIB, lorsqu'aucune activité (ni front montant, ni front descendant) n'a été détectée depuis un laps de temps prédéterminé.

Ainsi qu'on a pu le constater, ce mode de réalisation de l'invention est particulièrement simple. De plus, il s'appuie uniquement sur des éléments de base simples et classiques, tels que des portes logiques, des bascules et des compteurs.

Un des avantages essentiel de ce dispositif est d'assurer ainsi une démodulation entièrement numérique, et donc réalisable dans un circuit intégré en technologie numérique. En technologie CMOS, en considérant que $f_{éch}$ peut atteindre 20 MHz, il est possible de démoduler des fréquences $f_1$ et $f_2$ de l'ordre de quelques kHz.

Les résultats obtenus à l'aide de ce dispositif sont supérieures à ceux des circuits connus, tant en ce qui concerne la résistance aux bruits de transmission que les évanouissements (fading). De plus, le dispositif de l'invention est insensible au rapport cyclique.

Il est clair toutefois que de nombreux autres modes de réalisation peuvent être envisagés, s'appuyant sur une implantation différente des portes et des bascules, en fonction des besoins et de la technologie mise en oeuvre. De même, il est possible d'implanter complètement, ou partiellement (par exemple pour le décodage), le principe de démodulation selon l'invention dans un micro-processeur classique ou spécialisé.

Plus généralement, plusieurs adaptations sont envisageables sans sortir du cadre de l'invention. En effet, le principe de base de l'invention est la prise en compte d'un part des fronts montants et d'autre part des fronts descendants pour la démodulation du signal FSKR.

On peut donc par exemple simplifier le schéma de la figure 4 en supprimant les moyens de réinitialisation (signal RST), en supprimant ou modifiant les moyens 12 de filtrage, en limitant le décodage à la comparaison des périodes déterminées par les compteurs $13_D$ et $13_M$ avec le seuil $(T_1 + T_2)/2$.

Inversement, de nombreuses améliorations de l'invention sont possibles. A titre d'exemple, on peut par exemple prévoir la prise en compte d'autres paramètres, tel que la réponse impulsionnelle du canal à un instant donné, pour le filtrage et/ou le décodage.

## Revendications

1. Dispositif de démodulation d'un signal numérique modulé par déplacement de fréquence, une fréquence de modulation distincte ($f_1$,$f_2$) étant affectée à chaque valeur numérique que peut prendre ledit signal numérique, du type comprenant des moyens de conversion du signal modulé reçu en un signal logique (FSKR) pouvant prendre deux valeurs distinctes, dispositif caractérisé en ce qu'il comprend des moyens de mesure des temps écoulés entre deux fronts montants successifs ($13_M$) et entre deux fronts descendants successifs ($13_D$) dudit signal logique (FSKR), coopérant avec des moyens d'analyse (14) desdits temps écoulés, délivrant une estimation (DRIB) de la valeur dudit signal numérique mise à jour à chaque détection d'un desdits fronts montants et descendants dudit signal logique (FSKR).

2. Dispositif selon la revendication 1, caractérisé en ce que lesdits moyens ($13_M$,$13_D$) de mesure des temps écoulés comprennent deux compteurs ($431_M$,$431_D$), initialisés à chaque détection d'un front montant ou descendant respectivement, et activés à une fréquence de comptage très supérieure auxdites fréquences de modulation ($f_1$,$f_2$).

3. Dispositif selon la revendication 2, caractérisé en ce que ladite fréquence de comptage est au moins mille fois supérieure à la plus élevée desdites fréquences de modulation ($f_1$,$f_2$).

4. Dispositif selon l'une quelconque des revendications 1 à 3, du type appliqué à la démodulation d'un signal binaire modulé pouvant prendre deux fréquences distinctes $f_1$ et $f_2$, auxquelles correspondent deux périodes $T_1$ et $T_2$, $T_1$ étant supérieure à $T_2$, caractérisé en ce que lesdits moyens (14) d'analyse des temps écoulés positionnent (22) à la valeur binaire correspondant à ladite fréquence $f_2$ ladite estimation (DRIB) de la valeur dudit signal binaire lorsque le dernier temps écoulé mesuré entre deux fronts montants ou deux fronts descendants successifs est inférieur à la durée $(T_1 + T_2)/2$, et à la valeur binaire correspondant à ladite fréquence $f_1$ dans le cas contraire (23).

5. Dispositif selon la revendication 4, caractérisé en ce que lesdits moyens (14) d'analyse des temps écoulés conservent inchangée ladite estimation (DRIB) de la valeur dudit signal binaire lorsque le temps écoulé mesuré entre deux fronts montants ou deux fronts descendants successifs est inférieur à la durée $2T_2$-$T_1$ (21).

6. Dispositif selon l'une quelconque des revendications 4 et 5, caractérisé en ce que lesdits moyens (14) d'analyse des temps écoulés positionnent à sa valeur de repos ladite estimation (DRIB) de la valeur dudit signal binaire, lorsque le dernier temps écoulé entre deux fronts montants ou deux fronts descendants successifs est supérieur à la durée $2T_1$-$T_2$ - (24).

7. Dispositif selon l'une quelconque des revendications 4 à 6, caractérisé en ce que ladite période $T_1$ est inférieure ou égale à $1,9.T_2$.

8. Dispositif selon l'une quelconque des revendications 1 à 7, caractérisé en ce qu'il comprend des moyens (12) de filtrage préalable dudit signal logique (FSKR), éliminant les impulsions (35) d'une durée inférieure à un seuil prédéterminé.

9. Dispositif selon la revendication 8, caractérisé en ce que lesdits moyens (12) de filtrage comprennent un compteur (422), activé à une fréquence de comptage très supérieure auxdites fréquences de modulation ($f_1$,$f_2$), mesurant le temps écoulé entre deux fronts successifs dudit signal logique (FSKR), et des moyens d'élimination des fronts correspondant à une impulsion (35) d'une durée inférieure audit seuil prédéterminé.

10. Dispositif selon l'une quelconque des revendications 8 et 9, caractérisé en ce que ledit seuil prédéterminé est sensiblement égal au douzième de la période correspondant à la fréquence de modulation ($f_1$,$f_2$) la plus élevée.

11. Dispositif selon l'une quelconque des revendications 1 à 10, caractérisé en ce qu'il est réalisé en circuit intégré CMOS.

## FIG.1

## FIG.2

## FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | US-A-4 335 354 (CRANDALL ET AL) <br> * abrégé; figure 4 * <br> * colonne 1, ligne 22 * | 1,4-7,11 | H04L27/14 |
| A | | 1-3,8-10 | |
| | ----- | | |

**DOMAINES TECHNIQUES RECHERCHES (Int. Cl.5)**

H04L

Le présent rapport a été établi pour toutes les revendications

| Lieu de la recherche | Date d'achèvement de la recherche | Examinateur |
|---|---|---|
| LA HAYE | 25 SEPTEMBRE 1992 | SCRIVEN P. |

EPO FORM 1503 03.82 (P0402)